# EUROPEAN PATENT SPECIFICATION

(11) **EP 2 501 925 B1**
(45) Date of publication and mention of the grant of the patent: **15.07.2020**
(21) Application number: 09796135.3
(22) Date of filing: 18.11.2009
(51) Int. Cl.: F03B 13/00, F03G 6/00, F15B 1/04, H02J 15/00

(54) **METHOD AND SYSTEM FOR RENEWABLE ENERGY STORE IN TEMPERATURE-PRESSURE TANK OF ENERGY AND CONVERSION TO ELECTRICAL ENERGY**
VERFAHREN UND SYSTEM ZUR SPEICHERUNG VON ERNEUERBARER ENERGIE IN EINEM TEMPERATURDRUCKENERGIETANK UND UMWANDLUNG IN ELEKTRISCHE ENERGIE
PROCÉDÉ ET SYSTÈME D'ACCUMULATION D'ÉNERGIE RENOUVELABLE DANS UN RÉSERVOIR DE TEMPÉRATURE/PRESSION D'ÉNERGIE ET CONVERSION EN ÉNERGIE ÉLECTRIQUE

(43) Date of publication of application: 26.09.2012
(73) Proprietor: Iwanowski, Dariusz Krzysztof, 70-217 Szczecin (PL)
(72) Inventor: Iwanowski, Dariusz Krzysztof, 70-217 Szczecin (PL)
(86) International application number: PCT/PL2009/050035
(87) International publication number: WO 2011/062514

(56) References cited:
- EP-A1- 1 577 549
- WO-A1-2006/007733
- WO-A1-2006/032685
- DE-A1- 19 549 455
- US-A- 5 384 489

## Description

### Technical Field

This invention relates to an electrical power plant and more particularly to an renewable energy electrical power plant, and more particularly to an renewable energy electrical power plant having an energy store in temperature-pressure tank and producing constant stream of electrical energy.

Subject of the invention is a method and system for renewable energy store in temperature-pressure tank of energy and conversion to electrical energy making possible conversion of renewable energy variable stream, especially of wind, tide and the sun, to constant stream of electrical energy.

### Background Art

Power plants for producing electricity from many different energy sources including renewable energy sources, nuclear energy and fossil fuels are known.

Most of power plants can produce constant stream of electrical energy all the time because fuels can be stored (biomass, nuclear fuel, coal, gas) and burned/used when necessary. Unfortunately burning/usage of those fuels produce exhaust gases, dusts and nuclear wastes, which devastate environment. Some of power plants use a renewable energy of wind, tide or sunlight and don't produce exhaust gases, dusts and nuclear wastes. Unfortunately those electrical energy sources are variable during the time and these power plants are not able to produce constant stream of electrical energy. To avoid this disadvantage an energy storage solution are used.

Description of patent no JP2240401 (A) shows method of energy store in pressured substance in pressure accumulator.

Description of patent no FR2891095 (A1) shows method of energy store in heated substance in tank with water heated in the sun panels.

Description of patent no JP57146004 (A) shows method of energy store in heated substance in heat accumulator.

The patent EP 1577549 describes an apparatus for storing thermal energy and generating electricity, where wind or sun energy, or low-cost baseload electricity from a power grid, is used to heat a solid heat storage medium. Otherwise usage of fossil fuels is foreseen so emission of some exhaust gases and dusts is unavoidable.

The patent WO 2006/007733 describes an electric power plant with thermal storage medium, where electrical energy or hot exhaust gases are used to heat a solid heat storage medium. In an object of the patent all of energy is transmitted through the solid heat storage medium and results of this are significant losses of energy.

The patent US 5384489 describes a wind-powered electricity generating system with energy storage, where wind energy is used to heat a heat transfer fluid, which is stated to be at atmospheric pressure. Because of that the system cannot be used to store energy at high temperatures especially exceeding the boiling point of the heat transfer fluid. The system is equipped with special electrical generator which has separate collector to feed load of the system and another collector to feed heater of the heat transfer fluid. The heater is fed by the generator when energy production exceeds or is below minimum demand of the load.

### Summary of Invention

A method of renewable energy storage according to claim 1 is herewith disclosed.

A system suitable to carry out the method of claim 1 is disclosed in claim 2. The dependent claims specify other preferred embodiments of the invention.

### Brief Description of Drawings

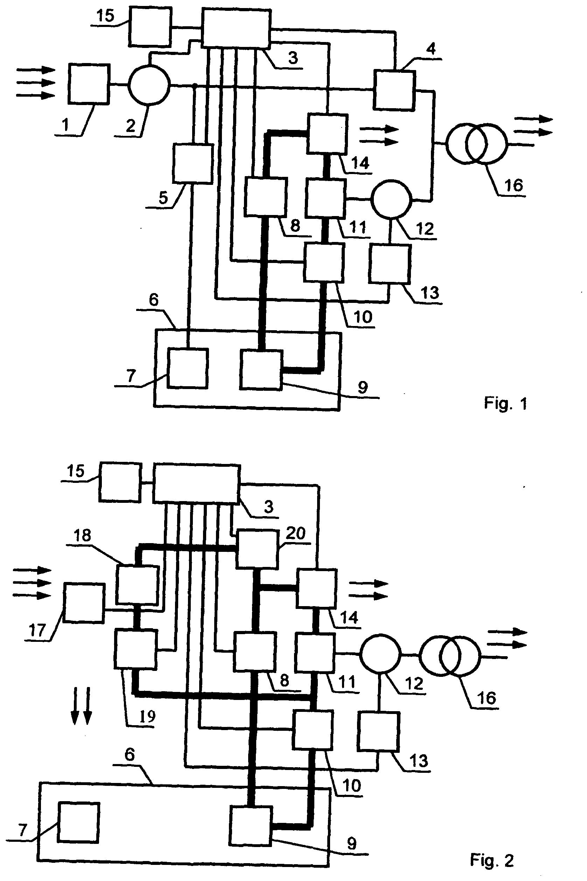

The subject of the invention in examples of realization is shown on drawing, where fig. 1 is showing system for storing renewable energy especially of wind and tides, fig. 2 is showing system for storing renewable energy especially of the sun.

### Description of Embodiments

Wind or tides turbine rotor 1, in example of realization according to fig. 1, is driven by variable energy stream of wind or water. Rotor 1 is converting this energy to mechanical energy driving generator 2, which converts it to electrical energy. Part of electrical energy steered by control system 3 is converted by converter 4 to electrical energy with parameters proper to the electrical grid. The rest part of electrical energy, steered by control system 3 is transferred through regulation-switching module 5 to temperature-pressure tank 6, where heating module 7 is converting this energy to heat of substance in tank. During the accumulation of energy in tank temperature and pressure are increasing. Steered by control system 3 pressing-valve module 8 is introducing transmission agent to located in temperature-pressure tank 6 heat exchanger 9. Agent, after being heated in heat exchanger 9, as the gas with pressure by valve 10 steered by control system 3 is given to turbine 11, which drives electrical generator 12. Parameters of produced energy are steered by control system 3 with control module 13. Transmission agent after passage through turbine 11 and the pressure decreasing is cooled in heat exchanger 14, where additional stream of heat is received. Renewable energy stream sensor 15 gives the information to control system 3 about actual power of wind or tides stream. It gives possibility of fast reaction of the system on a change of renewable energy stream and energy produced by generator 2. Proper steering of: converter 4, pressing-valve module 8, valve 10 and heat exchanger 14 in transmission agent circuit, control module 13 of generator 12, and the using of energy accumulated in rotating mass of turbine rotor 1 gives possibility of receiving constant stream of electrical energy introduced to the grid. If it is needed, while energy stream of wind or tides is present, it is possible the simultaneous work of generator 2 with converter 4 and generator 12 what gives even two times bigger electrical energy stream than in normal situation. If conversion of voltage produced by converter 4 and/or generator 12 to voltage of electrical grid is needed transformer 16 can be used. Moreover transformer 16 power can be lower than power of generator 2. The system steered by control system 3 can work as the stable electrical energy source without connection to the grid. Temperature-pressure tank 6 can be artificial or natural.

Stream of the sun energy, in example of realization according to fig. 2, is conducted on mirror 17 and heater 18. Mirror 17 steered by control system 3 is reflecting part of the sun energy in direction of heating module 7 located in temperature-pressure tank 6, which module 7 is converting energy to heat of substance in tank. During accumulation energy in tank temperature and pressure is increasing. Pressing-valve module 20 steered by control system 3 introduces transmission agent to heater 18. Agent, after being heated in heater 18, as the gas with pressure through valve 19 steered by control system 3 is given to turbine 11 supply circuit. Pressing-valve module 8 steered by control system 3 introduces transmission agent to heat exchanger 9 located in temperature-pressure tank 6. Agent, after being heated in heat exchanger 9, as the gas with pressure through valve 10 steered by control system 3 is given to turbine 11, which drives electrical generator 12. Parameters of produced energy are steered by control system 3 with control module 13. Transmission agent after passage through turbine 11 and the pressure decreasing is cooled in heat exchanger 14, where additional stream of heat is received. Renewable energy stream sensor 15 gives the information about actual power the sun energy stream for control system 3. It gives possibility of fast reaction of the system on a change of the sun energy stream and in result to change of energy steered by mirror 17 on heating module 7 and heater 18. Proper steering of: pressing-valve modules 8 and 20, valves 10 and 19 and heat exchanger 14 in transmission agent circuit, control module 13 of generator 12 gives possibility of receive constant stream of electrical energy introduced to the grid. If it is needed, while energy stream of the sun is present, it is possible the simultaneous work of heater 18 and heat exchanger 9 what gives even two times bigger stream of transmission agent which drives turbine 11 and generator 12 and in result two times bigger electrical energy stream than normal situation. If conversion of voltage produced by generator 12 to voltage of electrical grid is needed transformer 16 can be used. Moreover transformer 16 power can be lower than power collected and transmitted by mirror 17 and heater 18. The system steered by control system 3 can work as the stable electrical energy source without connection to the grid. Temperature-pressure tank 6 can be artificial or natural.

### Industrial Applicability

The method and system for renewable energy store in temperature-pressure tank of energy and conversion to electrical energy can be used as a constant, stable electrical energy source which can be connected to the electrical grid or can work as independent source and can supply electricity where it is needed.

## Claims

1. Method of renewable energy storage comprising the step of filling a tank with a substance held at high temperature and pressure for conversion into electrical energy **characterized by** the step of accumulating energy by heating the substance in the tank (6) and thereby increasing pressure and temperature of the substance; use of a
sensor (15) to give the information to a control system (3) about an actual stream of renewable energy and based on this information, the control system (3) steers: a converter (4), a valve module (8), a first heat exchanger (9), a valve (10), a turbine (11), a second exchanger (14) and a control module (13) of an additional generator (12); the control system (3) uses the energy accumulated in the rotating mass of the turbine (11) to generate electrical energy which is transferred to the grid.

2. System for renewable energy storage adapted to carry out the method of claim 1 comprising a turbine rotor (1), a generator (2), a regulation-switching module (5), a heating module (7), a sensor (15), a control system (3), a converter (4), a valve module (8), a valve (10) and a first heat exchanger (14).

3. System according claim 2, **characterized in that** heat accumulated in the tank (6) is transferred to a transmission agent in a heat exchanger (9) and then diverted through valve (10) to the turbine (11) in order to drive the generator (12).

4. System according claim 2 further comprising a converter (4).

5. System according claim 2 further comprising a transformer (16).

6. System according claim 2, wherein the control system (3) is suitable to generate can work as stable electrical energy source without connection to the grid.

7. System according claim 2, wherein the heat exchanger (14) can produce stream of heat, which can be used for other purposes.

8. System according claim 2, **characterized in that** the tank (6) can be made as artificial or natural.

9. System according claim 2, **characterized in that** renewable energy of sun can be used directly for heating substance in the tank (6), without any additional conversion.

10. System according claim 9, **characterized in that** part of sun energy is used for direct heating of transmission agent, which as gas with pressure is given to turbine (11) drives electrical generator (12).

11. System according claim 9, **characterized in that** generator (12) fed by energy from tank (6) and/or part of sun energy has lower power than power of sun energy stream.

12. System according claim 9, **characterized in that** when sun energy stream is present simultaneously using of sun energy and energy stored in tank (6) gives possibility to receive higher output power of system.

## Patentansprüche

1. Verfahren zur Speicherung erneuerbarer Energie, umfassend den Schritt des Füllens eines Tanks mit einer Substanz, die auf hoher Temperatur und hohem Druck gehalten wird, zur Umwandlung in elektrische Energie, **gekennzeichnet durch** den Schritt des Akkumulierens von Energie durch Erwärmen der Substanz im Tank (6) und dadurch Erhöhen des Drucks und Temperatur des Stoffes; Verwendung eines Sensors (15), um einem Steuerungssystem (3) Informationen über einen tatsächlichen Strom erneuerbarer Energie zu geben, und basierend auf diesen Informationen steuert das Steuerungssystem (3): einen Wandler (4), ein Ventilmodul (8)) einen ersten Wärmetauscher (9), ein Ventil (10), eine Turbine (11), einen zweiten Wärmetauscher (14) und ein Steuermodul (13) eines zusätzlichen Generators (12); Das Steuersystem (3) verwendet die in der rotierenden Masse der Turbine (11) gespeicherte Energie, um elektrische Energie zu erzeugen, die in das Netz übertragen wird.

2. System zur Speicherung erneuerbarer Energie zur Durchführung des Verfahrens nach Anspruch 1 mit einem Turbinenrotor (1), einem Generator (2), einem Regelungsschaltmodul (5), einem Heizmodul (7), einem Sensor (15)), eine Steuerung (3), einen Umrichter (4), ein Ventilmodul (8), ein Ventil (10) und einen ersten Wärmetauscher (14).

3. System nach Anspruch 2, **dadurch gekennzeichnet, dass** im Tank (6) gespeicherte Wärme auf ein Übertragungsmittel in einem Wärmetauscher (9) übertragen und dann über ein Ventil (10) zur Turbine (11) umgeleitet wird, um das anzutreiben Generator (12).

4. System nach Anspruch 2, ferner mit einem Konverter (4).

5. System nach Anspruch 2, weiterhin umfassend einen Transformator (16).

6. System nach Anspruch 2, bei dem das Steuersystem (3) geeignet ist, als stabile elektrische Energiequelle ohne Netzanschluss arbeiten zu können.

7. System nach einem der Ansprüche 2 bis 6, **dadurch gekennzeichnet, dass** der Wärmetauscher (14) einen Wärmestrom erzeugen kann, der für andere Zwecke verwendet werden kann.

8. System nach Anspruch 2, **dadurch gekennzeichnet, dass** der Tank (6) als künstlich oder natürlich ausgeführt sein kann.

9. System nach Anspruch 2, **dadurch gekennzeichnet, dass** erneuerbare Sonnenenergie ohne zusätzlichen Umbau direkt zum Heizen von Stoff im Tank (6) genutzt werden kann.

10. System nach Anspruch 9, **dadurch gekennzeichnet, dass** ein Teil der Sonnenenergie zur direkten Erwärmung des Übertragungsmittels verwendet wird, das als Gas mit Druck an den die Turbine (11) antreibenden elektrischen Generator (12) abgegeben wird.

11. System nach Anspruch 9, **dadurch gekennzeichnet, dass** der Generator (12), der mit Energie aus dem Tank (6) und / oder einem Teil der Sonnenenergie gespeist wird, eine geringere Leistung als die Leistung des Sonnenenergiestroms aufweist.

12. System nach Anspruch 9, **dadurch gekennzeichnet, dass** bei gleichzeitigem Vorhandensein eines Sonnenenergiestroms unter Verwendung von Sonnenenergie und im Tank (6) gespeicherter Energie die Möglichkeit besteht, eine höhere Ausgangsleistung des Systems zu erhalten.

## Revendications

1. Procédé de stockage d'énergie renouvelable comprenant l'étape de remplissage d'un réservoir avec une substance maintenue à haute température et pression pour la conversion en énergie électrique **caractérisée par** l'étape d'accumulation d'énergie en chauffant la substance dans le réservoir (6) et en augmentant ainsi la pression et température de la substance; utilisation d'un capteur (15) pour donner les informations à un système de contrôle (3) sur un flux réel d'énergie renouvelable et sur la base de ces informations, le système de contrôle (3) pilote: un convertisseur (4), un module de soupape (8), un premier échangeur de chaleur (9), une vanne (10), une turbine (11), un deuxième échangeur (14) et un module de commande (13) d'un générateur supplémentaire (12); le système de commande (3) utilise l'énergie accumulée dans la masse tournante de la turbine (11) pour générer de l'énergie électrique qui est transférée au réseau.

2. Système de stockage d'énergie renouvelable adapté pour mettre en oeuvre le procédé de la revendication 1 comprenant un rotor de turbine (1), un générateur (2), un module de régulation-commutation (5), un module de chauffage (7), un capteur (15), un système de commande (3), un convertisseur (4), un module de soupape (8), une soupape (10) et un premier échangeur de chaleur (14).

3. Système selon la revendication 2, **caractérisé en ce que** la chaleur accumulée dans le réservoir (6) est transférée à un agent de transmission dans un échangeur de chaleur (9) puis déviée par la vanne (10) vers la turbine (11) afin d'entraîner la générateur (12).

4. Système selon la revendication 2, comprenant en outre un convertisseur (4).

5. Système selon la revendication 2 comprenant en outre un transformateur (16).

6. Système selon la revendication 2, dans lequel le système de commande (3) est apte à générer peut fonctionner comme source d'énergie électrique stable sans connexion au réseau.

7. Système selon la revendication 2, dans lequel l'échangeur de chaleur (14) peut produire un flux de chaleur, qui peut être utilisé à d'autres fins.

8. Système selon la revendication 2, **caractérisé en ce que** le réservoir (6) peut être réalisé comme artificiel ou naturel.

9. Système selon la revendication 2, **caractérisé en ce que** l'énergie renouvelable du soleil peut être utilisée directement pour chauffer la substance dans le réservoir (6), sans aucune conversion supplémentaire.

10. Système selon la revendication 9, **caractérisé en ce qu'**une partie de l'énergie solaire est utilisée pour le chauffage direct de l'agent de transmission, qui sous forme de gaz sous pression est envoyé à la turbine (11) entraînant le générateur électrique (12).

11. Système selon la revendication 9, **caractérisé en ce que** le générateur (12) alimenté par l'énergie du réservoir (6) et / ou une partie de l'énergie solaire a une puissance inférieure à la puissance du flux d'énergie solaire.

12. Système selon la revendication 9, **caractérisé en ce que** lorsque le flux d'énergie solaire est présent simultanément, l'utilisation de l'énergie solaire et de l'énergie stockée dans le réservoir (6) donne la possibilité de recevoir une puissance de sortie plus élevée du système.
